# EUROPEAN PATENT APPLICATION

(11) **EP 4 227 849 A1**
(43) Date of publication of application: **16.08.2023**
(21) Application number: 22199714.1
(22) Date of filing: 05.10.2022
(51) Int. Cl.: G06F 40/166, G06F 40/197, G06Q 10/101

(54) **INFORMATION PROCESSING APPARATUS, PROGRAM, AND INFORMATION PROCESSING METHOD**

(30) Priority: 14.02.2022 JP 2022020628
(71) Applicant: Fujifilm Business Innovation Corp., Tokyo 107-0052 (JP)
(72) Inventor: SUEZAWA, Yoshihito, Yokohama (JP); ICHIKAWA, Kosuke, Yokohama (JP); BITO, Koji, Yokohama (JP); MATSUO, Takenori, Yokohama (JP); UCHIUMI, Yohei, Yokohama (JP); MARUYAMA, Atsushi, Yokohama (JP); KIKUSHIMA, Kosuke, Yokohama (JP)
(74) Representative: Meissner Bolte Partnerschaft mbB

(57) **Abstract**

An information processing apparatus includes a processor configured to: acquire one or more edits made to a stored electronic file; in a case where multiple edits made to the stored electronic file are acquired from multiple users and mutually incompatible edits are included in the multiple edits, accept from the multiple users votes for the mutually incompatible edits; and incorporate an edit among the mutually incompatible edits into the electronic file in accordance with a result of voting that is accepted.

## Description

### Background

### (i) Technical Field

The present disclosure relates to an information processing apparatus, a program, and an information processing method.

### (ii) Related Art

Japanese Unexamined Patent Application Publication (Translation of PCT Application) No. 2015-518206 discloses a method for managing co-authoring conflicts, and the method includes providing simultaneous co-authoring access to a document by a plurality of users; receiving an indication to save a first change made to a content in the document by a first user; saving the first change made to the content in the document while simultaneously receiving edits to the content by a second user; receiving an indication to save a second change made to the content in the document by the second user; determining if the second change made to the content in the document conflicts with the first change made to the content in the document; and if a conflict is determined, saving the second change as a conflict comment associated with the content in the document and allowing the first user and second user to continue editing the document without resolving the conflict.

### Summary

A technology is available to enable multiple users to jointly edit an electronic file by saving the electronic file in a server or other devices accessible to the multiple users.

When edits made to the electronic file are accepted from the multiple users, if the accepted edits are made to the same content, the accepted edits may be incompatible.

However, when a user edits the electronic file, it is sometimes impossible for the user to determine whether to incorporate the user's own edit because other users' intentions in making edits are not known to the user. Consequently, when incompatibility between edits made to the electronic file occurs, it is not always possible to incorporate an edit to be incorporated.

Accordingly, it is an object of the present disclosure to provide an information processing apparatus, a, and an information processing method which can incorporate an edit to be incorporated when incompatibility between edits made to an electronic file occurs.

According to a first aspect of the present disclosure, there is provided an information processing apparatus including a processor configured to: acquire one or more edits made to a stored electronic file; in a case where a plurality of edits made to the stored electronic file are acquired from a plurality of users and mutually incompatible edits are included in the plurality of edits, accept from the plurality of users votes for the mutually incompatible edits; and incorporate an edit among the mutually incompatible edits into the electronic file in accordance with a result of voting that is accepted.

According to a second aspect of the present disclosure, the processor in the information processing apparatus according to the first aspect is configured to: incorporate the edit into the electronic file if the result of voting indicates that the edit satisfies a predetermined criterion.

According to a third aspect of the present disclosure, the predetermined criterion is that the number of votes gained by the edit is largest in the information processing apparatus according to the second aspect.

According to a fourth aspect of the present disclosure, the predetermined criterion further includes a requirement that the number of votes exceeds a predetermined threshold in the information processing apparatus according to the third aspect.

According to a fifth aspect of the present disclosure, the processor in the information processing apparatus according to the third or fourth aspect is configured to: count, as the number of votes gained by each of the plurality of edits, a value weighted by a weighting factor assigned to each of the plurality of users in accordance with a privilege granted to the user.

According to a sixth aspect of the present disclosure, the processor in the information processing apparatus according to any one of the first aspect to the fifth aspect is configured to: when the result of voting is balanced, report to the plurality of users that the result of voting is balanced.

According to a seventh aspect of the present disclosure, the processor in the information processing apparatus according to the sixth aspect is configured to: further present a screen enabling the plurality of users to communicate with each other.

According to an eighth aspect of the present disclosure, the processor in the information processing apparatus according to any one of the first aspect to the seventh aspect is configured to: accept the votes during a predetermined period.

According to a ninth aspect of the present disclosure, the processor in the information processing apparatus according to the eighth aspect is configured to: determine the predetermined period in accordance with conditions of the plurality of users.

According to a tenth aspect of the present disclosure, the processor in the information processing apparatus according to any one of the first aspect to the ninth aspect is configured to: in accordance with the conditions of the plurality of users, report that the mutually incompatible edits are included.

According to an eleventh aspect of the present disclosure, the processor in the information processing apparatus according to any one of the first aspect to the tenth aspect is configured to: present the electronic file into which the edit is tentatively incorporated.

According to a twelfth aspect of the present disclosure, the processor in the information processing apparatus according to any one of the first aspect to the eleventh aspect is configured to: if a plurality of combinations of mutually incompatible edits are included, accept votes for the combinations in descending order of number of users associated with each of the combinations of mutually incompatible edits.

According to a thirteenth aspect of the present disclosure, the mutually incompatible edits are defined as mutually contradictory edits made to objects that are included in the electronic file and that have an inclusion relation in the information processing apparatus according to any one of the first aspect to the twelfth aspect.

According to a fourteenth aspect of the present disclosure, there is provided a program causing a computer to execute a process for information processing, the process including: acquiring one or more edits made to a stored electronic file; in a case where a plurality of edits made to the stored electronic file are acquired from a plurality of users and mutually incompatible edits are included in the plurality of edits, accepting from the plurality of users votes for the mutually incompatible edits; and incorporating an edit among the mutually incompatible edits into the electronic file in accordance with a result of voting that is accepted.

According to a fifteenth aspect of the present disclosure, there is provided an information processing method including: acquiring one or more edits made to a stored electronic file; in a case where a plurality of edits made to the stored electronic file are acquired from a plurality of users and mutually incompatible edits are included in the plurality of edits, accepting from the plurality of users votes for the mutually incompatible edits; and incorporating an edit among the mutually incompatible edits into the electronic file in accordance with a result of voting that is accepted.

The information processing apparatus according to the first aspect, the program according to the fourteenth aspect, and the information processing method according to the fifteenth aspect enable incorporation of an edit to be incorporated when incompatible edits are included in an electronic file.

The information processing apparatus according to the second aspect enables a criterion that a user hopes to apply, such as a majority vote and a unanimous vote, to be applied as a criterion for incorporating an edit.

The information processing apparatus according to the third aspect enables a criterion for incorporating an edit to be clarified.

When different opinions exist, in contrast to the case where an edit to be incorporated is determined by a majority vote, the information processing apparatus according to the fourth aspect can prevent or reduce occurrence of incorporating an edit that has gained votes from less than half of all the users.

The information processing apparatus according to the fifth aspect can incorporate the intention of an administrating user, such as an administrator.

When different opinions exist, the information processing apparatus according to the sixth aspect enables users to recognize that different opinions exist.

When different opinions exist, the information processing apparatus according to the seventh aspect enables users to reconcile their opinions.

In contrast to the case where the voting period is not determined, the information processing apparatus according to the eighth aspect can reduce a waiting period during which an edit to be incorporated is not determined.

The information processing apparatus according to the ninth aspect can accept votes from more users than in the case where conditions of users are not taken into account.

The information processing apparatus according to the tenth aspect enables a user who does not update an electronic file at present to recognize that incompatible edits are included.

The information processing apparatus according to the eleventh aspect enables a user to recognize an edit made by another user.

In contrast to the case where users associated with incompatible edits are not taken into account, the information processing apparatus according to the twelfth aspect can reduce the number of times that votes are cast by users.

The information processing apparatus according to the thirteenth aspect can clarify that incompatible edits are included.

### Brief Description of the Drawings

Exemplary embodiments of the present disclosure will be described in detail based on the following figures, wherein:
Fig. 1 is a schematic illustration depicting an example of a configuration of an information processing system according to each of the exemplary embodiments;
Fig. 2 is a block diagram depicting an example of a hardware configuration of an information processing apparatus according to each of the exemplary embodiments;
Fig. 3 is a block diagram depicting an example of a functional configuration of the information processing apparatus according to each of the exemplary embodiments;
Fig. 4 is an illustration depicting an example of an incompatibility definition table according to each of the exemplary embodiments;
Fig. 5 is an illustration depicting an example of edits made to a document according to each of the exemplary embodiments;
Fig. 6 is a schematic illustration depicting an example of a voting screen according to each of the exemplary embodiments;
Fig. 7 is an illustration depicting an example of incompatible edits detected according to each of the exemplary embodiments;
Fig. 8 is a schematic illustration depicting an example of a user communication screen according to each of the exemplary embodiments;
Fig. 9 is a flowchart depicting an example of an incorporation process according to each of the exemplary embodiments;
Fig. 10 is a flowchart depicting an example of a determination process according to a first exemplary embodiment;
Fig. 11 is an illustration depicting an example of edits made to a document according to a second exemplary embodiment;
Figs. 12A, 12B, and 12C are illustrations depicting an example of incompatible edits detected according to the second exemplary embodiment;
Fig. 13 is a flowchart depicting an example of a determination process according to the second exemplary embodiment;
Fig. 14 is a flowchart depicting an example of a determination process according to a third exemplary embodiment;
Fig. 15 is a flowchart depicting an example of a determination process according to a fourth exemplary embodiment; and
Fig. 16 is a flowchart depicting an example of a determination process according to a fifth exemplary embodiment.

### Detailed Description

### First Exemplary Embodiment

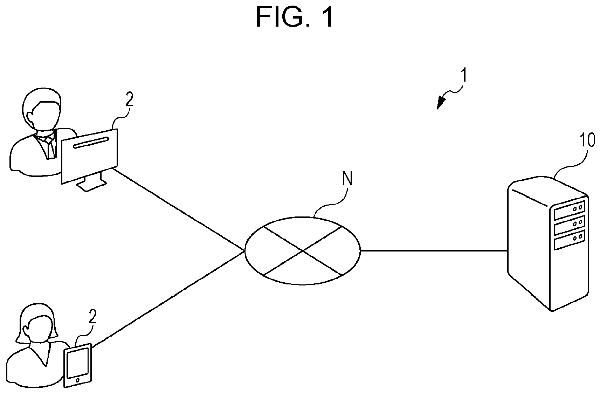

Hereinafter, exemplary embodiments for practicing the present disclosure will be described in detail with reference to the drawings. Fig. 1 is a schematic illustration depicting an example of a configuration of an information processing system 1 according to the present exemplary embodiment.

As depicted in Fig. 1 as an example, the information processing system 1 includes terminals 2 and an information processing apparatus 10. Each of the terminals 2 is configured to access the information processing apparatus 10 and edit a document, which is a stored electronic file, and the information processing apparatus 10 is configured to store a document and accept edits from the terminals 2. The terminals 2 and the information processing apparatus 10 are connected to each other by using a network N. In the present exemplary embodiment, description will be given with regard to the case where a server is used as the information processing apparatus 10. However, this is not meant to be limiting. The information processing apparatus 10 may be disposed in one of the terminals 2. In addition, in the present exemplary embodiment, description will be given with regard to the case where a "document" including text is adopted as an electronic file. However, this is not meant to be limiting. An electronic file may be spreadsheet data, drawing data, or image data. An electronic file may be any data as long as the data is electronically recorded in a personal computer.

Each of the terminals 2 is a device such as a personal computer or a tablet device, which is operated by a user. The terminal 2 is configured to acquire a document from the information processing apparatus 10 and transmit an edit made to the document to the information processing apparatus 10.

The information processing apparatus 10 is configured to store a document and incorporate an edit accepted from the terminal 2 into the stored document.

In the present exemplary embodiment, description will be given with regard to the case where a user is assigned to each of the terminals 2 and each user is identifiable. However, this is not meant to be limiting. A user who operates the terminal 2 may be authenticated and thereby identified.

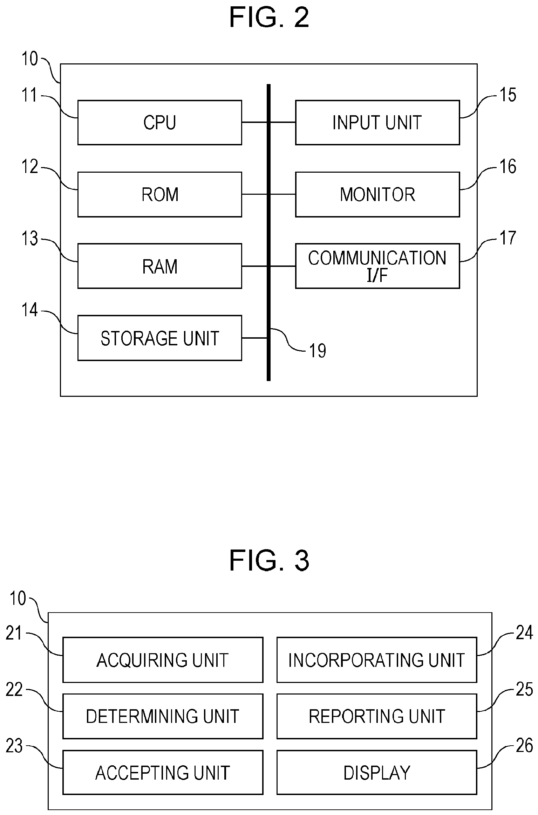

Next, a hardware configuration of the information processing apparatus 10 will be described with reference to Fig. 2. Fig. 2 is a block diagram depicting an example of the hardware configuration of the information processing apparatus 10 according to the present exemplary embodiment.

As depicted in Fig. 2, the information processing apparatus 10 according to the present exemplary embodiment includes a central processing unit (CPU) 11, a read-only memory (ROM) 12, a random-access memory (RAM) 13, a storage unit 14, an input unit 15, a monitor 16, and a communication interface (communication I/F) 17. The CPU 11, the ROM 12, the RAM 13, the storage unit 14, the input unit 15, the monitor 16, and the communication I/F 17 are connected to each other by using a bus 19. The CPU 11 is an example of a processor.

The CPU 11 is in charge of and is configured to control overall operation of the information processing apparatus 10. The ROM 12 is configured to store various programs including an information processing program and various kinds of data used in the present exemplary embodiment. The RAM 13 is used as a work area while various programs are executed. The CPU 11 is configured to perform a process of incorporating an edit by loading the programs stored in the ROM 12 onto the RAM 13 and executing the programs.

The storage unit 14 is formed by a device such as a hard disk drive (HDD), a solid state drive (SSD), or a flash memory. The input unit 15 is formed by devices such as a mouse, a touch panel, and a keyboard, which are configured to accept operation such as input of a character and selection of an object. The monitor 16 is configured to display text and an image. The communication I/F 17 is configured to transmit and receive data.

Next, a functional configuration of the information processing apparatus 10 will be described with reference to Fig. 3. Fig. 3 is a block diagram depicting an example of the functional configuration of the information processing apparatus 10 according to the present exemplary embodiment.

As depicted in Fig. 3 as an example, the information processing apparatus 10 includes an acquiring unit 21, a determining unit 22, an accepting unit 23, an incorporating unit 24, a reporting unit 25, and a display unit 26. The CPU 11 is configured to execute the information processing program and function as the acquiring unit 21, the determining unit 22, the accepting unit 23, the incorporating unit 24, the reporting unit 25, and the display unit 26.

The acquiring unit 21 is configured to acquire an edit made to a document from a terminal 2. The acquired edit is associated with a user who has edited the document. When acquiring an edit made by a user, the acquiring unit 21 acquires an edit made by another user.

The determining unit 22 is configured to determine whether mutually incompatible edits are included in multiple edits. Specifically, based on an incompatibility definition table stored in advance, the determining unit 22 determines whether incompatible edits are included in the acquired edits and other stored edits.

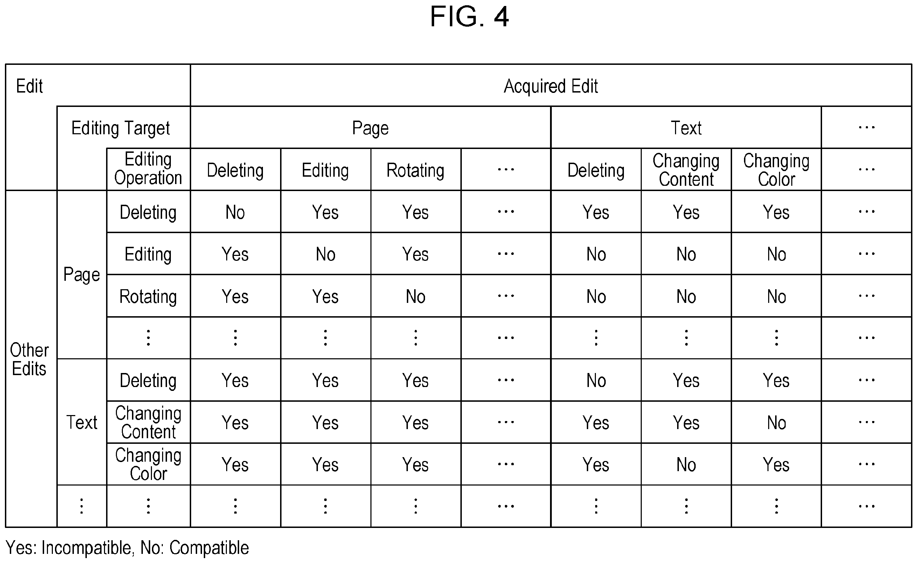

Fig. 4 is an illustration depicting an example of the incompatibility definition table. The incompatibility definition table defines incompatibility between the editing operation associated with an acquired edit and the editing operation associated with another edit. For example, if the editing operation associated with an acquired edit is "deleting a page" and the editing operation associated with another edit is "changing content" of text, these edits cannot simultaneously be incorporated. Thus, the acquired edit and the other edit are mutually incompatible, and the incompatibility definition table indicates "Yes", which represents incompatibility. If the acquired edit and the other edit are not incompatible, the incompatibility definition table indicates "No".

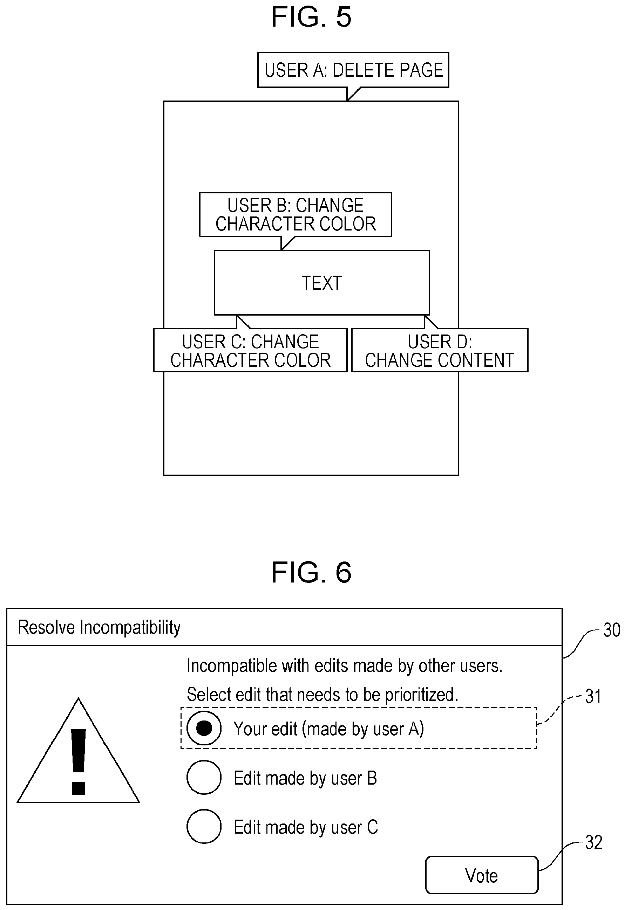

Incompatibility indicates a situation in which mutually contradictory edits are made to editing targets that are included in a document and that have an inclusion relation. As depicted in Fig. 5 as an example, a page included in a document includes text, figures, and other content, and an edit made to the page may affect the text, figures and other content included in the page. In other words, an inclusion relation is a relation in which an editing target is included in another editing target. Description will be given with regard to an inclusion relation according to the present exemplary embodiment. An inclusion relation according to the present exemplary embodiment includes, for example, a page, text and a figure, and an edit made to text and a figure. For example, since "deleting a page" depicted in Fig. 5 affects "changing character color" in the text included in the page and "changing content" in the same text, the page and the text have an inclusion relation. Further, multiple operations of "changing character color" performed on the same text have an inclusion relation, and operations of "changing character color" involving contradictory changes are incompatible.

The description has been given with regard to the case where the incompatibility definition table according to the present exemplary embodiment is defined in advance. However, this is not meant to be limiting. The incompatibility definition table may be defined by a user, or a modification to defined incompatibility may be accepted.

The accepting unit 23 is configured to accept votes for an edit to be incorporated from users in the case where incompatible edits are included. Specifically, the accepting unit 23 is configured to transmit a voting screen 30, which is depicted in Fig. 6 as an example, to users associated with incompatible edits (referred to as "users making incompatible edits" below) and accept a vote for an edit from each of the users. The voting screen 30 includes selection radio buttons 31 and a voting button 32. The selection radio buttons 31 are used to accept selection of an object for which a vote is cast, and the voting button 32 is used to transmit the selected object as a result of voting.

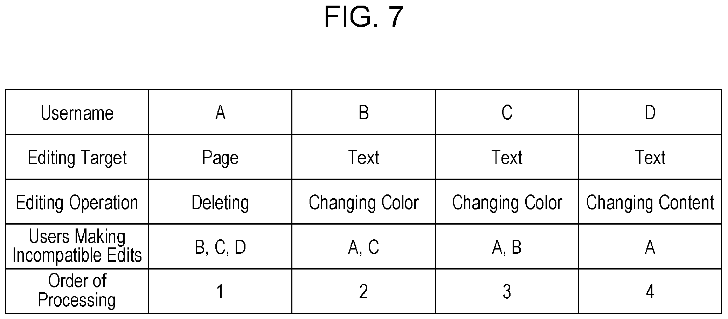

When multiple combinations of incompatible edits are included, the accepting unit 23 identifies users making incompatible edits, and votes are cast in descending order of number of users making incompatible edits. For example, the accepting unit 23 identifies incompatible edits and users making incompatible edits. As depicted in Fig. 7 as an example, for each user, the accepting unit 23 identifies an editing target, an editing operation associated with the user, and users who have made incompatible edits. The accepting unit 23 determines the order of processing in descending order of number of users making incompatible edits, presents the voting screen 30 in the order of processing, and accepts a vote. The accepting unit 23 accepts votes from the users during a predetermined period.

The incorporating unit 24 is configured to incorporate an edit among incompatible edits into a document in accordance with the result of voting accepted by the accepting unit 23. For example, as the result of voting, the incorporating unit 24 determines that an edit that has gained the largest number of votes (determined by majority decision) is to be incorporated and incorporates the edit into the stored document. In the present exemplary embodiment, description will be given with regard to the case where the edit to be incorporated into the document is the edit that has gained the largest number of votes. However, this is not meant to be limiting. For example, the edit to be incorporated into the document may be the edit that has gained all the users' votes (determined unanimously) or the edit that has gained votes exceeding a predetermined threshold (referred to as a "minimum required vote" below) and that has gained the largest number of votes. In other words, the incorporating unit 24 determines that the edit that satisfies a predetermined criterion, such as a majority vote, a unanimous vote, or a minimum required vote, is the edit to be incorporated. The minimum required vote may be determined in advance or may be determined in accordance with the number of users making incompatible edits. For example, the minimum required vote may be determined by an equation: the minimum required vote = the number of users making incompatible edits - 1.

The reporting unit 25 is configured to report to the users making incompatible edits that the edits are incompatible if the numbers of votes are balanced or if a predetermined criterion is not satisfied. If incompatible edits are included, the reporting unit 25 also acquires the conditions of the users from the terminals 2, and if one or more users are unreachable by communication, the reporting unit 25 gets in contact with the one or more users' contact points stored in advance and reports that incompatible edits are included. Examples of a situation in which a user is "unreachable by communication" include a situation in which a terminal 2 is offline, that is, not connected to the network and a situation in which a terminal 2 has not been operated for a predetermined period.

The display unit 26 is configured to present a user communication screen 40 through which the users making incompatible edits are able to communicate with each other if the numbers of votes are balanced or if a predetermined criterion is not satisfied.

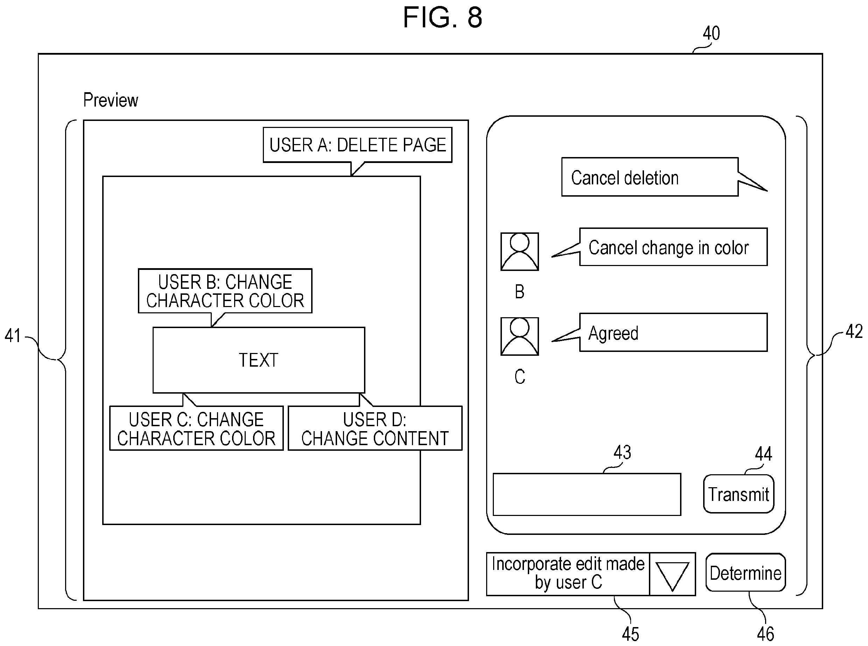

Fig. 8 depicts an example of the user communication screen 40. The user communication screen 40 has a preview area 41 and a communication area 42. The communication area 42 has an entry form 43, a transmission button 44, a selection form 45, and a determination button 46. The preview area 41 is used to present incompatible edits. The communication area 42 enables the users making incompatible edits to communicate with each other and is used to accept an edit selected by the users as the edit to be incorporated. The entry form 43 is used to accept entry of a message to another user, and the transmission button 44 is used to transmit the message accepted by using the entry form 43 to the other user. The selection form 45 is used to accept selection of the edit to be incorporated, and the determination button 46 is used to transmit an instruction for designating the selected edit as the edit to be incorporated.

Description will be given with regard to the case where an editing operation associated with an edit made by each user is presented in a balloon in the preview area 41 according to the present exemplary embodiment. However, this is not meant to be limiting. For example, the preview area 41 may present a preview image into which an edit made by a user is tentatively incorporated. Description will be given with regard to the case where the communication area 42 according to the present exemplary embodiment is configured to accept selection made by a user during a predetermined period. However, this is not meant to be limiting. A period may be set in accordance with conditions of users, and selection made by the users may be accepted during that period.

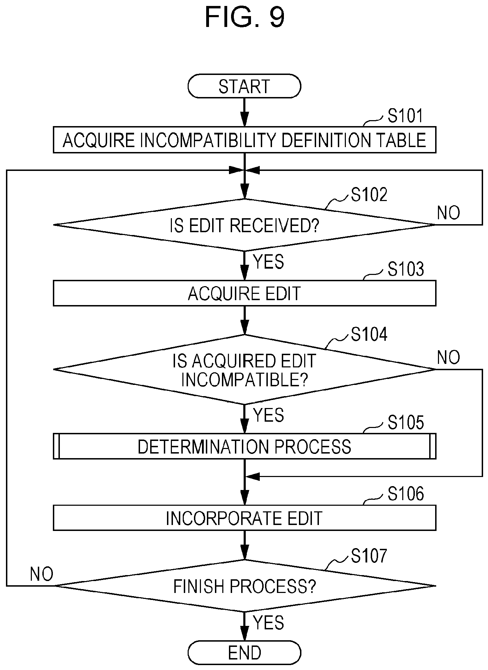

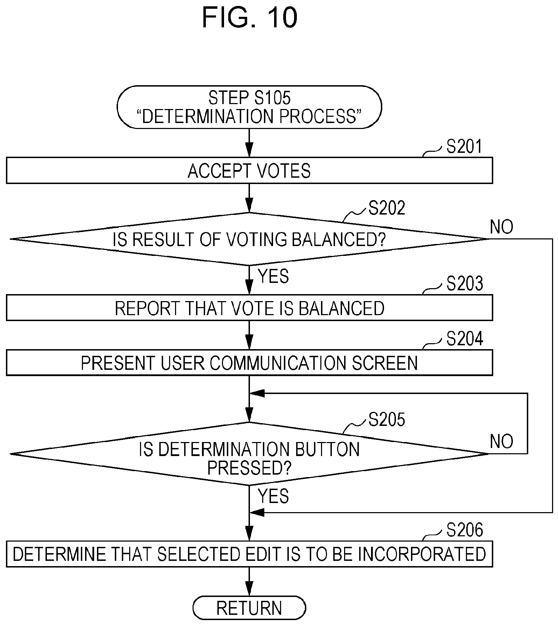

Next, operation of the information processing apparatus 10 according to the present exemplary embodiment will be described with reference to Figs. 9 and 10. Fig. 9 is a flowchart depicting an example of a process of incorporating an edit according to the present exemplary embodiment. The CPU 11 loads the information processing program from the ROM 12 or the storage unit 14 and executes the information processing program, and the incorporation process depicted in Fig. 9 is performed. The incorporation process depicted in Fig. 9 is performed, for example, in response to entry of an instruction for performing a process of incorporating an edit.

In step S101, the CPU 11 acquires an incompatibility definition table stored in advance.

In step S102, the CPU 11 determines whether an edit transmitted from the terminal 2 is received. If an edit is received (YES in step S102), the CPU 11 proceeds to step S103. In contrast, if an edit is not received (NO in step S102), the CPU 11 waits for an edit to be received.

In step S103, the CPU 11 acquires the edit. Other edits made by other users are acquired in this step.

In step S104, the CPU 11 determines whether the acquired edit is mutually incompatible with the other edits. If the acquired edit is incompatible (YES in step S104), the CPU 11 proceeds to step S105. In contrast, if the acquired edit is not incompatible (NO in step S104), the CPU 11 proceeds to step S106.

In step S105, the CPU 11 performs a determination process of determining an edit to be incorporated among multiple incompatible edits. The determination process will be described in detail with reference to Fig. 10 below.

In step S106, the CPU 11 incorporates into a target document the edit determined to be incorporated.

In step S107, the CPU 11 determines whether to finish the process of incorporating an edit. If the process is to be finished (YES in step S107), the CPU 11 finishes the process. In contrast, if the process is not to be finished (NO in step S107), the CPU 11 returns to step S102 and determines whether an edit is received.

Next, the determination process will be described with reference to Fig. 10. Fig. 10 is a flowchart depicting an example of a process of determining an edit among incompatible edits according to the present exemplary embodiment. The CPU 11 loads the determination program from the ROM 12 or the storage unit 14 and executes the determination program, and the determination process depicted in Fig. 10 is performed. The determination process depicted in Fig. 10 is performed, for example, when the edits are determined to be incompatible.

In step S201, the CPU 11 transmits the voting screen 30 to the terminals 2, presents the voting screen 30, and accepts votes for an edit to be incorporated.

In step S202, the CPU 11 determines whether the result of voting is balanced. If the result of voting is balanced (YES in step S202), the CPU 11 proceeds to step S203. In contrast, if the result of voting is not balanced (NO in step S202), the CPU 11 proceeds to step S206.

In step S203, the CPU 11 reports to the users that the vote is balanced and that an edit to be incorporated is not determined.

In step S204, the CPU 11 transmits and presents the user communication screen 40 to the users associated with incompatible edits.

In step S205, the CPU 11 determines whether the determination button 46 is pressed in the user communication screen 40 to determine an edit to be incorporated. If the determination button 46 is pressed (YES in step S205), the CPU 11 proceeds to step S206. In contrast, while the determination button 46 is not pressed (NO in step S205), the CPU 11 waits for the determination button 46 to be pressed.

In step S206, the CPU 11 determines that the selected edit is to be incorporated.

As described above, when incompatible edits are included in an electronic file, it is possible to incorporate an edit to be incorporated according to the present exemplary embodiment.

### Second Exemplary Embodiment

In the first exemplary embodiment, the description has been given with regard to the case where only one combination of incompatible edits is included in a document. In the present exemplary embodiment, description will be given with regard to the case where multiple combinations of incompatible edits are included in a document.

Description will be omitted below with regard to the configuration of the information processing system 1 (refer to Fig. 1), the hardware configuration of the information processing apparatus 10 (refer to Fig. 2), the functional configuration of the information processing apparatus 10 (refer to Fig. 3), and the incompatibility definition table (refer to Fig. 4) because these components are the same as or similar to those in the first exemplary embodiment. Further, description will be omitted below with regard to the figure depicting an example of incompatible edits (refer to Fig. 5), the voting screen 30 (refer to Fig. 6), the figure depicting details of incompatible edits (refer to Fig. 7), the user communication screen 40 (refer to Fig. 8), and the flowchart depicting the incorporation process (refer to Fig. 9) because these figures are the same as or similar to those in the first exemplary embodiment.

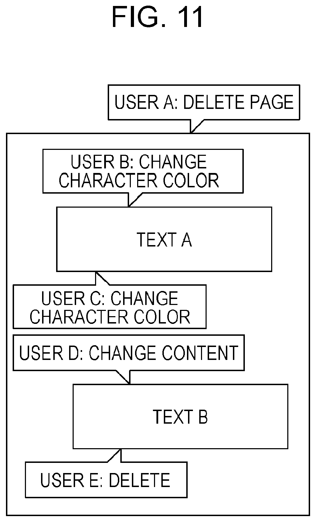

First, referring to Fig. 11, description will be given with regard to the case where multiple combinations of incompatible edits are included according to the present exemplary embodiment. Fig. 11 is a schematic illustration depicting multiple combinations of incompatible edits according to the present exemplary embodiment.

As depicted in Fig. 11 as an example, a page included in a document sometimes includes multiple text blocks, figures, and other components. For example, a page included in a document includes multiple editing targets, and multiple combinations of incompatible edits will result if editing operations such as "deleting a page" from the document, multiple operations of "changing character color" in text A, and "changing content" of text B and "deleting" the text B are performed. Specifically, the edit made to the page, the edit made to the text A, and the edit made to the text B are incompatible. The multiple edits made to the text A concerning "changing character color" are incompatible. The edits made to the text B concerning "changing content" and "deleting" are incompatible.

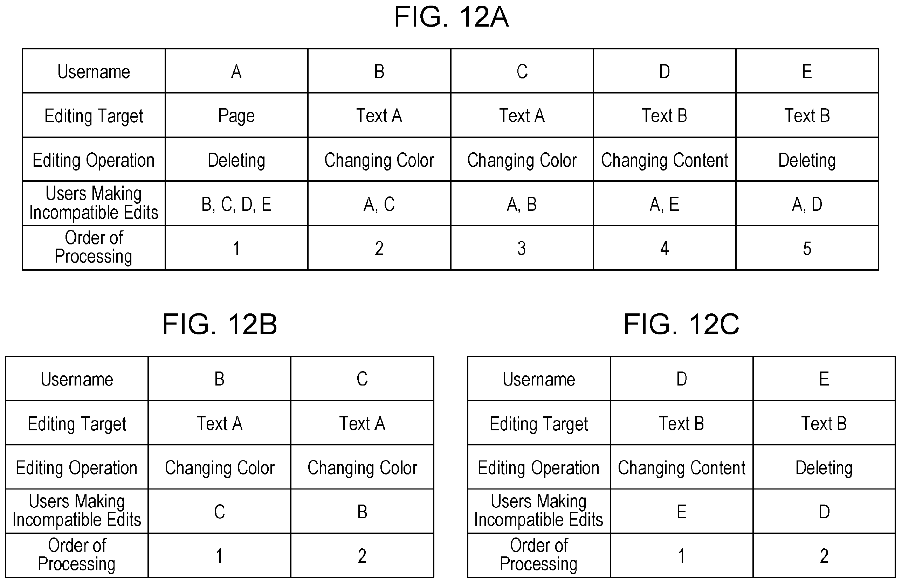

When multiple combinations of incompatible edits are included, the determining unit 22 depicted in Fig. 3 uses the edit made by each user and determines an editing target, an editing operation, users making incompatible edits, and the order of processing for each user as depicted in Fig. 12A as an example. The information processing apparatus 10 resolves each combination of incompatible edits in accordance with the order of processing by causing the accepting unit 23 to accept votes and causing the display unit 26 to present the user communication screen 40.

In Fig. 11, for example, after the edit associated with the editing operation "deleting a page" is canceled by vote or communication between users and then the incompatibility is resolved, incompatibility still remains in text A and text B as depicted in Figs. 12B and 12C. In the information processing apparatus 10, the accepting unit 23 accepts votes from the users associated with edits to the text A, and the display unit 26 presents the user communication screen 40 to those users. The accepting unit 23 and the display unit 26 do the same for the users associated with edits to the text B. In this way, for each combination of incompatible edits, the information processing apparatus 10 uses vote and communication between users to resolve all the incompatible edits. In summary, when multiple combinations of incompatible edits are included, the information processing apparatus 10 accepts votes for each combination of incompatible edits, presents the user communication screen 40, and determines an edit to be incorporated. The information processing apparatus 10 repeats the process of determining an edit until all the incompatible edits are resolved.

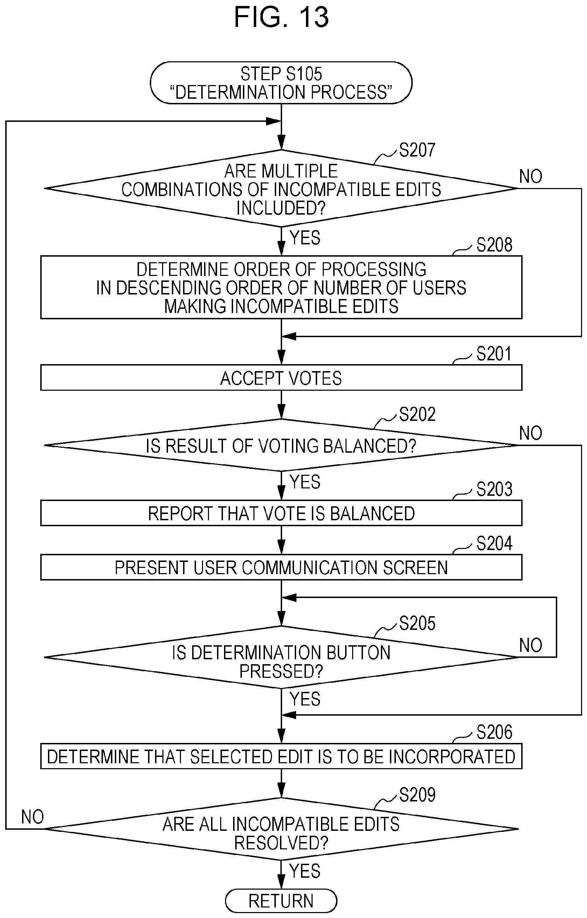

Next, the determination process will be described with reference to Fig. 13. Fig. 13 is a flowchart depicting an example of a process of determining an edit among incompatible edits according to the present exemplary embodiment. The CPU 11 loads the determination program from the ROM 12 or the storage unit 14 and executes the determination program, and the determination process depicted in Fig. 13 is performed. The determination process depicted in Fig. 13 is performed, for example, when the edits are determined to be incompatible. In Fig. 13, the same symbols are attached to steps that are the same as the steps in the determination process depicted in Fig. 10, and description with regard to such steps will be omitted.

In step S207, the CPU 11 determines whether multiple combinations of incompatible edits are included. If multiple combinations of incompatible edits are included (YES in step S207), the CPU 11 proceeds to step S208. In contrast, if multiple combinations of incompatible edits are not included (NO in step S207), the CPU 11 proceeds to step S201.

In step S208, for the multiple combinations of incompatible edits, the CPU 11 determines the order of processing in descending order of number of users making incompatible edits.

In step S209, the CPU 11 determines whether all the incompatible edits are resolved. If all the incompatible edits are resolved (YES in step S209), the CPU 11 finishes the determination process. In contrast, if not all the incompatible edits are resolved (NO in step S209), the CPU 11 returns to step S207 and determines whether multiple combinations of incompatible edits are included.

As described above, according to the present exemplary embodiment, the number of times that votes are cast by the users can be reduced compared with the case where the users associated with incompatible edits are not taken into account.

### Third Exemplary Embodiment

In the second exemplary embodiment, the description has been given with regard to the case where multiple combinations of incompatible edits are included in a document. In the present exemplary embodiment, description will be given with regard to the case where privileges granted to the users are taken into account when votes are accepted.

In the first exemplary embodiment and the second exemplary embodiment, the description has been given with regard to the cases where an edit to be incorporated is determined in accordance with the number of users who have cast votes for the edit. In the present exemplary embodiment, description will be given with regard to the case where a privilege is granted to each user in advance and the user casts a vote with the privilege taken into account.

For example, when accepting votes for an edit, the accepting unit 23 depicted in Fig. 3 acquires a privilege granted to each user in advance and assigns a weighting factor to the user in accordance with the privilege. The accepting unit 23 counts votes weighted by weighting factors, and the incorporating unit 24 determines the edit to be incorporated in accordance with the weighted votes that are counted.

A weighting factor may be determined in advance or may be determined in accordance with the number of users making incompatible edits. For example, if there are four users making incompatible edits including one user having the "administrator" privilege and three users having the "general user" privilege, the information processing apparatus 10 prioritizes the edit made by the user having the "administrator" privilege. In this case, the information processing apparatus 10 may set the weighting factor for the user having the "administrator" privilege to a value determined by an equation: the weighting factor = (the number of users making incompatible edits - 1) x 1 + 1 points. In this way, the edit made by the user having the "administrator" privilege is prioritized. Further, if the minimum required vote is set, the weighting factor for the user having the "administrator" privilege may be set to a value determined by an equation: the weighting factor = the minimum required vote x 1 points.

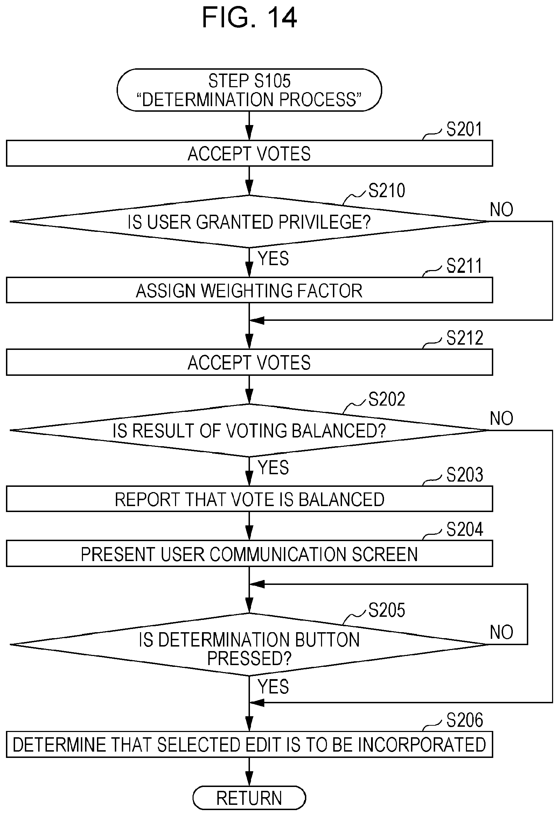

Next, the determination process will be described with reference to Fig. 14. Fig. 14 is a flowchart depicting an example of a process of determining an edit among incompatible edits according to the present exemplary embodiment. The CPU 11 loads the determination program from the ROM 12 or the storage unit 14 and executes the determination program, and the determination process depicted in Fig. 14 is performed. The determination process depicted in Fig. 14 is performed, for example, when the edits are determined to be incompatible. In Fig. 14, the same symbols are attached to steps that are the same as the steps in the determination process depicted in Fig. 10, and description with regard to such steps will be omitted.

In step S210, the CPU 11 determines whether a user is granted a privilege such as the "administrator" privilege. If the user is granted the privilege (YES in step S210), the CPU 11 proceeds to step S211. In contrast, if the user is not granted the privilege (NO in step S210), the CPU 11 proceeds to step S212.

In step S211, the CPU 11 assigns a weighting factor in accordance with the granted privilege.

In step S212, the CPU 11 accepts votes from the users. If a weighting factor is assigned to each user, votes weighted by weighting factors are counted in step S212.

As described above, according to the present exemplary embodiment, the intention of an administrating user, such as an administrator, can be incorporated.

### Fourth Exemplary Embodiment

In the third exemplary embodiment, the description has been given with regard to the case where a weighting factor is assigned in accordance with the privilege granted to a user. In the present exemplary embodiment, description will be given with regard to the case where the voting period is determined in accordance with conditions of users.

In the first exemplary embodiment to the third exemplary embodiment, the description has been given with regard to the cases where the voting period is predetermined. In the present exemplary embodiment, description will be given with regard to the case where the voting period is determined in accordance with conditions of users.

For example, if incompatible edits are included, the accepting unit 23 depicted in Fig. 3 acquires connection conditions of the users making incompatible edits and determines the voting period in accordance with the connection conditions. Specifically, if the users making incompatible edits can access the information processing apparatus 10, the accepting unit 23 sets the voting period to a short period, such as three minutes. If one or more users making incompatible edits cannot access the information processing apparatus 10, the accepting unit 23 sets the voting period to a long period, such as one hour. The accepting unit 23 accepts votes during the voting period, and the incorporating unit 24 determines an edit to be incorporated in accordance with the result of voting obtained during the voting period.

In the present exemplary embodiment, the description has been given with regard to the case where the voting period is predetermined whether short or long. However, this is not meant to be limiting. A short voting period or a long voting period may be determined based on the record of the result of voting in the past. For example, a voting time of each user may be collected for a short voting period and a long voting period, and the average, the median, the maximum, and the minimum of the voting times may be calculated for the short voting period and the long voting period. A new short voting period may be set to one of the average, the median, the maximum, and the minimum of the voting times calculated for the short voting period, and a new long voting period may be set to one of the average, the median, the maximum, and the minimum of the voting times calculated for the long voting period.

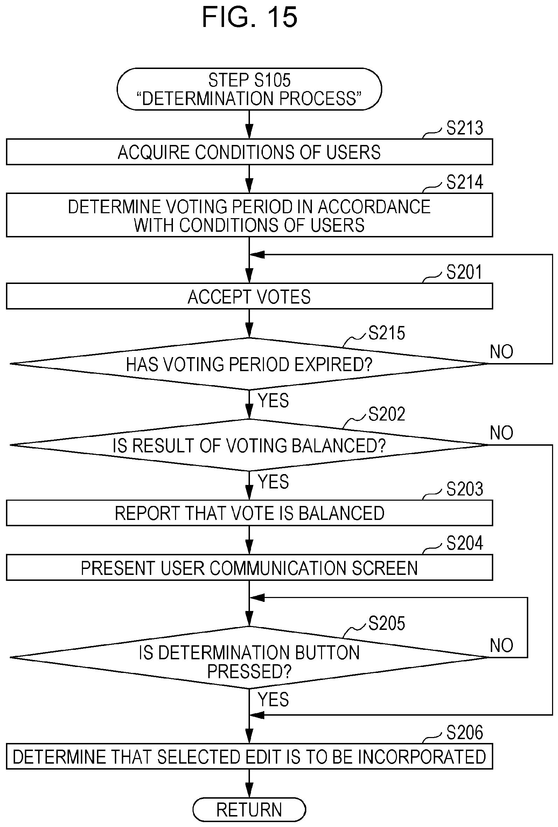

Next, the determination process will be described with reference to Fig. 15. Fig. 15 is a flowchart depicting an example of a process of determining an edit among incompatible edits according to the present exemplary embodiment. The CPU 11 loads the determination program from the ROM 12 or the storage unit 14 and executes the determination program, and the determination process depicted in Fig. 15 is performed. The determination process depicted in Fig. 15 is performed, for example, when the edits are determined to be incompatible. In Fig. 15, the same symbols are attached to steps that are the same as the steps in the determination process depicted in Fig. 10, and description with regard to such steps will be omitted.

In step S213, the CPU 11 acquires conditions of the users making incompatible edits.

In step S214, the CPU 11 determines a voting period in accordance with the conditions of the users making incompatible edits. The voting period is set to a long period if one or more users making incompatible edits are unreachable by communication and set to a short period if none of the users making incompatible edits are unreachable by communication (all the users making incompatible edits are reachable by communication).

In step S215, the CPU 11 determines whether the voting period has expired. If the voting period has expired (YES in step S215), the CPU 11 proceeds to step S202. In contrast, if the voting period has not expired (NO in step S215), the CPU 11 returns to step S201 and continues to accept votes until the voting period expires.

As described above, according to the present exemplary embodiment, in contrast to the case where the voting period is not determined, a waiting period during which an edit to be incorporated is not determined can be reduced.

### Fifth Exemplary Embodiment

In the fourth exemplary embodiment, the description has been given with regard to the case where the voting period is determined in accordance with conditions of users. In the present exemplary embodiment, description will be given with regard to the case where a user is notified in accordance with the condition of the user.

For example, if incompatible edits are included, the reporting unit 25 depicted in Fig. 3 acquires conditions of the users making incompatible edits, and if one or more users making incompatible edits are unreachable by communication, the reporting unit 25 reports that incompatible edits are included by getting in contact with the one or more users' contact points registered in advance. Examples of a user's contact point include a user's telephone number, an email address, and an Internet Protocol (IP) address of a terminal 2.

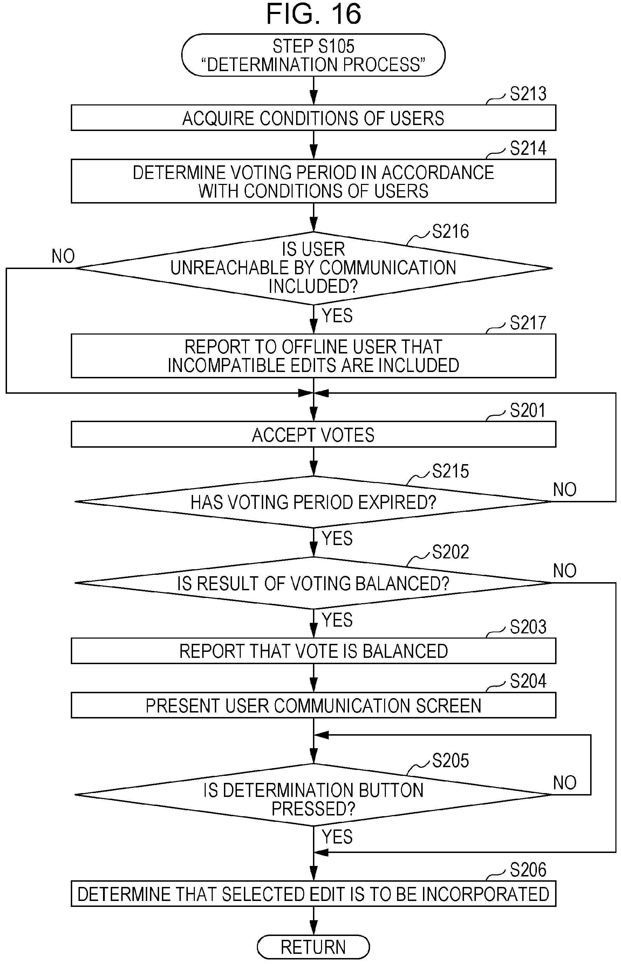

The determination process will be described with reference to Fig. 16. Fig. 16 is a flowchart depicting an example of a process of determining an edit among incompatible edits according to the present exemplary embodiment. The CPU 11 loads the determination program from the ROM 12 or the storage unit 14 and executes the determination program, and the determination process depicted in Fig. 16 is performed. The determination process depicted in Fig. 16 is performed, for example, when the edits are determined to be incompatible. In Fig. 16, the same symbols are attached to steps that are the same as the steps in the determination process depicted in Fig. 15, and description with regard to such steps will be omitted.

In step S216, based on the acquired conditions of the users, the CPU 11 determines whether one or more users making incompatible edits are unreachable by communication. If one or more users are unreachable by communication (YES in step S216), the CPU 11 proceeds to step S217. In contrast, if none of the users is unreachable by communication (NO in step S216), the CPU 11 proceeds to step S201 and continues to accept votes.

In step S217, by getting in contact with contact points registered in advance, the CPU 11 reports to the one or more users who are unreachable by communication that incompatible edits are included.

As described above, according to the present exemplary embodiment, a user having no access to the information processing apparatus 10 can recognize that incompatible edits are included.

The present disclosure has been described by using the exemplary embodiments as above, but the scope of the present disclosure is not limited to the range described by using the above exemplary embodiments. Various modifications and improvements to each of the exemplary embodiments are possible without departing from the spirit of the present disclosure, and embodiments incorporating such modifications or improvements are also within the technical scope of the present disclosure.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

Further, in the present exemplary embodiments, the description has been given with regard to the case where the information processing program is stored in a storage device, but the present disclosure is not limited to this example. The information processing program according to the present exemplary embodiments may be recorded in a computer-readable recording medium and provided. For example, the information processing program according to the present exemplary embodiments may be recorded on an optical disc, such as a compact disc ROM (CD-ROM) or a digital versatile disc ROM (DVD-ROM), and provided. The information processing program according to the present exemplary embodiments may be recorded in a semiconductor memory, such as a universal serial bus (USB) memory or a memory card, and provided. Further, the information processing program according to the present exemplary embodiments may be acquired from an external apparatus via a communication line connected to the communication I/F.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims and their equivalents.

## Claims

1. An information processing apparatus comprising:
a processor configured to:
acquire one or more edits made to a stored electronic file;
in a case where a plurality of edits made to the stored electronic file are acquired from a plurality of users and mutually incompatible edits are included in the plurality of edits, accept from the plurality of users votes for the mutually incompatible edits; and
incorporate an edit among the mutually incompatible edits into the electronic file in accordance with a result of voting that is accepted.

2. The information processing apparatus according to Claim 1,
wherein the processor is configured to:
incorporate the edit into the electronic file if the result of voting indicates that the edit satisfies a predetermined criterion.

3. The information processing apparatus according to Claim 2,
wherein the predetermined criterion is that the number of votes gained by the edit is largest.

4. The information processing apparatus according to Claim 3,
wherein the predetermined criterion further includes a requirement that the number of votes exceeds a predetermined threshold.

5. The information processing apparatus according to Claim 3 or 4,
wherein the processor is configured to:
count, as the number of votes gained by each of the plurality of edits, a value weighted by a weighting factor assigned to each of the plurality of users in accordance with a privilege granted to the user.

6. The information processing apparatus according to any one of Claims 1 to 5,
wherein the processor is configured to:
when the result of voting is balanced, report to the plurality of users that the result of voting is balanced.

7. The information processing apparatus according to Claim 6,
wherein the processor is configured to:
further present a screen enabling the plurality of users to communicate with each other.

8. The information processing apparatus according to any one of Claims 1 to 7,
wherein the processor is configured to:
accept the votes during a predetermined period.

9. The information processing apparatus according to Claim 8,
wherein the processor is configured to:
determine the predetermined period in accordance with conditions of the plurality of users.

10. The information processing apparatus according to any one of Claims 1 to 9,
wherein the processor is configured to:
in accordance with the conditions of the plurality of users, report that the mutually incompatible edits are included.

11. The information processing apparatus according to any one of Claims 1 to 10,
wherein the processor is configured to:
present the electronic file into which the edit is tentatively incorporated.

12. The information processing apparatus according to any one of Claims 1 to 11,
wherein the processor is configured to:
if a plurality of combinations of mutually incompatible edits are included, accept votes for the combinations in descending order of number of users associated with each of the combinations of mutually incompatible edits.

13. The information processing apparatus according to any one of Claims 1 to 12,
wherein the mutually incompatible edits are defined as mutually contradictory edits made to objects that are included in the electronic file and that have an inclusion relation.

14. A program causing a computer to execute a process for information processing, the process comprising:
acquiring one or more edits made to a stored electronic file;
in a case where a plurality of edits made to the stored electronic file are acquired from a plurality of users and mutually incompatible edits are included in the plurality of edits, accepting from the plurality of users votes for the mutually incompatible edits; and
incorporating an edit among the mutually incompatible edits into the electronic file in accordance with a result of voting that is accepted.

15. An information processing method comprising:
acquiring one or more edits made to a stored electronic file;
in a case where a plurality of edits made to the stored electronic file are acquired from a plurality of users and mutually incompatible edits are included in the plurality of edits, accepting from the plurality of users votes for the mutually incompatible edits; and
incorporating an edit among the mutually incompatible edits into the electronic file in accordance with a result of voting that is accepted.
